# EUROPEAN PATENT SPECIFICATION

(11) **EP 3 069 022 B1**
(45) Date of publication and mention of the grant of the patent: **05.02.2020**
(21) Application number: 14812875.4
(22) Date of filing: 17.11.2014
(51) Int. Cl.: F03D 15/00, F03D 7/02, F03D 80/00, F03D 80/70, F03D 80/80, F03D 9/25

(54) **WIND TURBINE**
WINDTURBINE
TURBINE ÉOLIENNE

(30) Priority: 15.11.2013 GB 201320191
(43) Date of publication of application: 21.09.2016
(73) Proprietor: Ricardo UK Limited, West Sussex BN43 5FG (GB)
(72) Inventor: GUERN, Pierre, Shoreham-by-Sea West Sussex BN43 5FG (GB); PACKER, James, Shoreham-by-Sea West Sussex BN43 5FG (GB); WHEALS, Jonathan, Shoreham-by-Sea West Sussex BN43 5FG (GB); GEE, Tim, Shoreham-by-Sea West Sussex BN43 5FG (GB)
(74) Representative: McWilliams, David John
(86) International application number: PCT/GB2014/053391
(87) International publication number: WO 2015/071689

(56) References cited:
- WO-A1-2011/120721
- US-A- 5 385 018
- US-A1- 2010 144 450
- US-A1- 2012 121 419

## Description

The present invention relates to improvements in wind turbines. More generally, the disclosure relates to mechanisms for protecting rotating machinery from excess torque and/or non-torque forces and moments.

Conventional wind turbines have a bladed rotor that is coupled to an electrical generator via a rotor shaft and a gearbox. Rotation of the bladed rotor causes rotation of the main shaft, and the gearbox is used to drive an output shaft at a speed suitable for a generator. Load is transmitted from the rotor to the gearbox via a gearbox input shaft driven by the main rotor shaft.

The rotor shaft and gearbox input shaft receive drive torque from the rotor. However, in addition to drive torque, the shafts are subjected to high forces and off-axis torques from the rotor blades. The high forces and off-axis torques are due to the inherent turbulence and shear wind characteristics of wind. In addition, drive torque from the rotor to the shafts is variable, and can include torque spikes due to gusts of wind.

Off-axis loads and spikes in torque lead to a reduction in gearbox life. One option for addressing these issues is increasing the size of the gearbox components. However, there are disadvantages to doing so. Gearboxes are usually positioned at the top of the wind turbine tower and increased gearbox mass is undesirable, as is the increase in materials.

Direct drive wind turbines have a generator coupled to the rotor, and rotating at the same speed as the rotor. In this case, off axis loads may cause a deflection of the generator rotor relative to the generator stator. To accommodate such deflection, a large air gap between rotor and stator is required, which reduces generator efficiency.

It is known to use variable pitch blades in wind turbines to respond to variable wind speed, and to limit torque into the turbine driveline in high wind conditions. However, in general the variable pitch blades can only respond after a gust of wind has hit the turbine, as the control system that determines the change of pitch of the blades requires a response time. Additional wind sensing equipment such as LIDAR is known and may be used to improve gust prediction, but this is inherently difficult due to the large area swept by the wind turbine blades. There is also a risk that the additional load at a blade root when a gust of wind hits may deform the pitch bearings, effectively locking the blade pitch and preventing torque reduction by the pitch system.

The torque applied to the wind turbine drivetrain will depend on the choice of generator, power electronics and grid characteristics. However, in all arrangements the torque spike due to the driveline acceleration will still be present. Grid and power electronics failures may also apply additional torque spikes to the wind turbine driveline, due to rapid changes in generator air-gap torque.

Document WO 2011/120721 shows a wind turbine comprising a rotor shaft configured for operation by a rotor.

The present invention provides an improved wind turbine.

According to an aspect of the present invention there is provided a wind turbine comprising:
a rotor shaft configured for operation by a rotor;
a drive shaft configured to be driven by the rotor shaft; and
a generator driven by the drive shaft;
a torque control mechanism provided between the rotor shaft and the drive shaft;
wherein the torque control mechanism comprises at least two links extending between the rotor shaft and the drive shaft, the links having a first end and a second end,
wherein the length of each link is variable, and
characterised in that the first end is pivotably connected to the rotor shaft and the second end is pivotably connected to the drive shaft.

The invention may be applied to a wind turbine of the 'geared'-type, e.g. wherein the drive shaft is a gearbox input shaft. The invention may also be applied to a wind turbine of the 'direct drive'-type, e.g. wherein the drive shaft is a generator input shaft.

Controlling torque within the driveline of a wind turbine is desirable and the provision of a torque control mechanism of the kind set forth has multiple advantages. Importantly, providing pivotable links of adjustable length allows angular, radial, axial and rotational displacement between the rotor shaft and the drive shaft. This allows for a reduction of non-torque load transfer from the rotor shaft, since bending moment applied to the rotor shaft by the rotor can be accounted for or isolated. The invention also allows for torque truncation, since the pivotable connection and variable length of the links allows for relative angular motion between the rotor shaft and the drive shaft. The pivotable connection in particular provides a considerable range of relative angular motion between the rotor shaft and the drive shaft, as discussed in further detail below. The torque control mechanism may be configured to allow relative rotation between the rotor shaft and the drive shaft of up to 30°.

In 'geared' embodiments, providing means for controlling the loads (torque and non-torque) transmitted to the gearbox via the gearbox input shaft advantageously increases the life of the gearbox and allows a smaller gearbox to be used.

The links may be actuators (e.g. linear actuators) configured to allow controlled length adjustment. This allows the relationship between the shafts to be actively controlled.

The links may be hydraulic cylinders. Hydraulic cylinders are ideally suited for providing an appropriate amount of controllable force for wind turbine applications.

In exemplary embodiments, the cylinders are configured to act in compression in normal operation. In such embodiments, the second pivot point of at least one cylinder may be offset from the second pivot point of at least one further cylinder along a longitudinal axis of the drive shaft. This arrangement allows simple control of non-torque loads via adjustment of hydraulic pressure.

In exemplary embodiments, there is provided a control system for the torque control mechanism. In exemplary embodiments wherein the links comprise actuators, a control system may be incorporated, e.g. to permit control of the actuator forces. In exemplary embodiments, sensors may be configured to provide feedback to the control system. In exemplary embodiments, the sensors comprise at least one actuator displacement sensor. In exemplary embodiments wherein the actuators comprise hydraulic cylinders, the control system may allow for calculation of the correct/desired hydraulic pressure for each cylinder.

The control mechanism may comprise a feedback controller, which calculates required actuator forces from sensor measurements. The control mechanism may estimate the degree of misalignment in the torque control mechanism using actuator displacement sensors. The control mechanism may calculate the required actuator force to limit off-axis torques and forces to the gearbox, using estimated torque control mechanism misalignment.

In other embodiments, at least one cylinder is configured to act in tension in normal operation. A combination of cylinders configured to act in compression and tension under normal operating conditions allows the torque control mechanism to act passively, without the need for cylinder pressure control.

The torque control mechanism may comprise at least six links. It has been found that six links provide optimum support and flexibility between the shafts, allowing independent control of the six degree of freedom loads applied to the gearbox or generator input shaft.

The torque control mechanism may comprise six links in the form of three cylinders configured to act in compression and three cylinders configured to act in tension. Again, this arrangement allows the torque control mechanism to act passively, without the need for cylinder pressure control, and provides an optimum number of cylinders.

Each first and or second end may comprise a spherical or ball joint. A spherical or ball joint at one or both ends of the link allows pivoting of the link in multiple directions with respect to the respective shaft.

The turbine may further comprise a slip device arranged before the generator and configured to allow slip when a predetermined torque load is reached, in order to isolate the generator from excess torque (e.g. under sustained load conditions). In exemplary 'geared' embodiments, the slip device is arranged between the gearbox and generator. In exemplary 'direct' embodiments, the slip device is arranged between the torque control mechanism and the generator. The slip device may comprise a clutch mechanism. In exemplary embodiments, a brake device is provided before the generator, and the slip device is provided between the brake device and the generator (e.g. a disc brake acting on the gearbox output shaft). In exemplary 'geared' embodiments, the brake device is arranged between the gearbox and the generator, e.g. a disc brake acting on an output shaft of the torque control mechanism.

The slip device provides back-up torque limitation, particularly advantageous in 'geared' embodiments, providing longer term torque protection for the gearbox input shaft and associated gearbox under extreme load conditions such as repeated or extended gust conditions. This additional protection may allow for a reduction in size of the torque control mechanism.

In exemplary embodiments, the drive shaft extends within the rotor shaft.

Each link may be a hydraulically actuated device configured to expand or contract along a longitudinal axis. The device may comprise a bellows.

The device may be substantially cylindrical. The device may comprise at least one annular support. The device may comprise a series of annular supports axially spaced from one another.

The device may further comprise a guide configured to guide the bellows. The guide may be tubular. The guide may define a vent.

The torque control mechanism may be configured to allow relative rotation between the rotor shaft and the drive shaft of up to 30°. Alternatively, the torque control mechanism may be configured to allow relative rotation between the rotor shaft and the drive shaft of up to 20°.

The torque control mechanism may have an unloaded state in which the rotor shaft is coaxial with the drive shaft.

The longitudinal axis of each device may be arranged at an angle of inclination relative to an axis perpendicular to a longitudinal axis of the drive shaft in the unloaded state.

The wind turbine may further comprise a control system for the torque control mechanism, for controlling the hydraulic pressure of each device.

The wind turbine may include sensors to provide feedback to the control system. The sensors may comprise actuator displacement sensors, at least one for each device. The control system may comprise a feedback controller, which calculates required device forces based on data from the sensors.

The torque control mechanism may comprise a combination of devices configured to act in compression and tension during normal operation. The longitudinal axis of the device may be aligned along an axis perpendicular to a longitudinal axis of the drive shaft in the unloaded state.

The torque control mechanism may comprise at least six links. Said at least six links may comprise three pairs of devices, wherein a first device in each pair is configured to act in compression during normal operation and a second device in each pair is configured to act in tension during normal operation.

Each pivotable connection between the links and the respective rotor shaft or drive shaft may comprise a spherical joint or ball joint.

The torque control mechanism may have an unloaded state in which the rotor shaft is coaxial with the drive shaft.

The wind turbine may further comprise a clutch-type slip device arranged between the drive shaft and the generator, for protecting the generator at predetermined torque load conditions. The wind turbine may comprise a gearbox arranged between the drive shaft and the generator, and the slip device may be arranged between the gearbox and the generator, to allow slip between an output shaft of the gearbox and an input shaft of the generator above predetermined torque levels.

A brake device may be arranged to act on the output shaft of the gearbox, and the brake device may be provided between the gearbox and the slip device

The drive shaft may extend within the rotor shaft.

The wind turbine may further comprise at least one accumulator configured to rotate with the torque control mechanism.

According to another aspect of the invention, there is provided a wind turbine comprising a rotor shaft configured for operation by a rotor; a drive shaft configured to be driven by the rotor shaft; and a generator driven by the drive shaft; the wind turbine further comprising a hydraulic cylinder arrangement acting between the rotor shaft and the drive shaft; wherein the hydraulic cylinder arrangement is configured to allow relative rotation between the rotor shaft and the drive shaft.

The invention may be applied to a wind turbine of the 'geared'-type, e.g. wherein the drive shaft is a gearbox input shaft. The invention may also be applied to a wind turbine of the 'direct drive'-type, e.g. wherein the drive shaft is a generator input shaft.

In exemplary embodiments, the hydraulic cylinder arrangement comprises a plurality of hydraulic cylinders, each having a piston reciprocably movable within a cylinder body so as to be adjustable in length, and each cylinder is pivotably connected between the rotor shaft and the drive shaft. Each pivotable connection may comprise a spherical or ball joint.

In exemplary embodiments, each cylinder has a first end and a second end, and wherein one end of a cylinder is coupled to the rotor shaft and the other end of the cylinder is coupled to the drive shaft, or vice versa.

In exemplary embodiments, the cylinders are configured to act in compression in normal operation.

In exemplary embodiments, there is provided a control system for controlling cylinder forces. In exemplary embodiments, sensors may be configured to provide feedback to the control system. In exemplary embodiments, the sensors comprise at least one cylinder displacement sensor.

The hydraulic cylinder arrangement may comprise a feedback controller, which calculates required cylinder forces from sensor measurements. The hydraulic cylinder arrangement may estimate the degree of misalignment in the hydraulic cylinder arrangement using the cylinder displacement sensors.

In other embodiments, at least one cylinder is configured to act in compression and at least one cylinder is configured to act in tension under normal operating conditions. A combination of cylinders configured to act in compression and tension allows the hydraulic cylinder arrangement to act passively, without the need for cylinder pressure control.

The hydraulic cylinder arrangement may comprise at least six hydraulic cylinders, e.g. all acting in compression.

In exemplary embodiments, the hydraulic cylinder arrangement comprises three cylinders configured to act in compression and three cylinders configured to act in tension.

In exemplary embodiments, a slip device is arranged before the generator and configured to allow slip when a predetermined torque load is reached. In exemplary 'geared' embodiments, the slip device is arranged between the gearbox and generator. In exemplary 'direct' embodiments, the slip device is arranged between the hydraulic cylinder arrangement and the generator. The slip device may comprise a clutch mechanism. In exemplary embodiments, a brake device is provided before the generator, and the slip device is provided between the brake device and the generator. In exemplary 'geared' embodiments, the brake device is arranged between the gearbox and the generator (e.g. a disc brake acting on the gearbox output shaft). In exemplary 'direct' embodiments, the brake device is arranged between the hydraulic cylinder arrangement and the generator (e.g. a disc brake acting on an output shaft of the hydraulic cylinder arrangement).

In exemplary embodiments, the torque control mechanism has an unloaded state in which the rotor shaft is coaxial with the drive shaft.

In exemplary embodiments, the drive shaft extends within the rotor shaft.

Advantages of the invention are applicable to other types of rotating machinery, e.g. where it may be desirable to protect the machinery from excess torque and/or non-torque forces and moments. Accordingly, a further aspect of the invention provides a torque control mechanism comprising at least two links extending between first and second rotatable shafts, wherein the links are pivotably connected to the first and second shafts, and wherein the length of each link is adjustable.

In exemplary embodiments, the links are linear actuators configured to allow for controlled length adjustment. In exemplary embodiments, the links are hydraulic cylinders. In exemplary embodiments, each hydraulic cylinder has a cylinder body and a piston arranged for axial movement with respect to the cylinder body. In exemplary embodiments, each cylinder is pivotably connected between the rotor shaft and the drive shaft. Each pivotable connection may comprise a spherical or ball joint. In exemplary embodiments, each cylinder has a first end and a second end, and wherein one end of a cylinder is coupled to the rotor shaft and the other end of the cylinder is coupled to the drive shaft, or vice versa.

In exemplary embodiments, the cylinders are configured to act in compression during normal operation.

In exemplary embodiments, the torque control mechanism has an unloaded state in which the first shaft is coaxial with the second shaft.

In exemplary embodiments, the links comprise hydraulic cylinders and a control system is provided for controlling the hydraulic pressure of each cylinder. In exemplary embodiments, sensors provide feedback to the control system, e.g. at least one actuator displacement sensor for each cylinder. In exemplary embodiments, the control system comprises a feedback controller, which calculates required actuator forces based on data from the sensors.

In exemplary embodiments, the torque control mechanism comprises a combination of hydraulic cylinders configured to act in compression and tension during normal operation.

In exemplary embodiments, the torque control mechanism comprises at least six links.

In exemplary embodiments, the second shaft extends within the first shaft.

The hydraulic cylinder arrangement may be configured to allow relative rotation between the rotor shaft and the drive shaft of up to 30°. Alternatively, the hydraulic cylinder arrangement may be configured to allow relative rotation between the rotor shaft and the drive shaft of up to 20°.

The wind turbine may further comprise at least one accumulator configured to rotate with the hydraulic cylinder arrangement.

According to another aspect of the invention, there is provided a wind turbine comprising:
a rotor shaft configured for operation by a rotor;
a drive shaft configured to be driven by the rotor shaft;
a generator driven by the drive shaft; and
a torque control mechanism provided between the rotor shaft and the drive shaft;
wherein the torque control mechanism comprises at least two links extending between the rotor shaft and the drive shaft, the links having a first end and a second end, the first end being pivotably connected to the rotor shaft and the second end being pivotably connected to the drive shaft.

According to yet another aspect of the invention, there is provided a wind turbine comprising:
a rotor shaft configured for operation by a rotor;
a drive shaft configured to be driven by the rotor shaft;
a generator driven by the drive shaft; and
a torque control mechanism provided between the rotor shaft and the drive shaft;
wherein the torque control mechanism comprises at least two links extending between the rotor shaft and the drive shaft, the links having a first end and a second end, the first end being connected to the rotor shaft and the second end being connected to the drive shaft, and wherein the length of each link is variable.

The first end may be pivotably connected to the rotor shaft. Alternatively, or additionally, the second end may be pivotably connected to the drive shaft.

Others aspects and features of the invention will be apparent from the claims and following description of embodiments, made by way of example only, with reference to the following drawings, in which:
Figure 1 is a schematic perspective view of a wind turbine;
Figure 2 is a schematic diagram of a wind turbine driveline of the 'geared' type, according to an exemplary embodiment of the invention;
Figure 3 is a series of views of a torque control mechanism according to an exemplary embodiment of the invention, in a first position;
Figure 4 is a series of views of the torque control mechanism of Figure 3, in a second position;
Figure 5 is a schematic view of the torque control mechanism of Figures 3 and 4 in the first position;
Figure 6 is a schematic view of the torque control mechanism of Figures 3, 4 and 5 in the second position;
Figure 7 is a series of views of a torque control mechanism according to another exemplary embodiment of the invention, in a first position;
Figure 8 is a series of views of the torque control mechanism of Figure 7, in a second position;
Figure 9 is a schematic block diagram showing an example of a control system for a wind turbine torque control mechanism;
Figure 10 is a schematic diagram of a wind turbine driveline of the 'direct' type, in accordance with a further exemplary embodiment of the invention;
Figure 11 is similar to Figure 5, but wherein the pistons of the hydraulic cylinders are pivotably connected to the rotor shaft;
Figure 12 is a schematic diagram of an exemplary hydraulic cylinder and accumulator arrangement;
Figure 13 is similar to a view from Figure 7 and illustrates an exemplary embodiment showing an option for the location and alignment of accumulators for receiving pressurised fluid from the hydraulic cylinders;
Figure 14 is similar to Figure 13, illustrating a further exemplary option for location and alignment of the accumulators;
Figure 15 is a cross-sectional view through a link for a torque control mechanism according to another exemplary embodiment;
Figure 16 is a cross-sectional view through a link for a torque control mechanism according to another exemplary embodiment;
Figure 17 is a cross-sectional view through a link for a torque control mechanism according to another exemplary embodiment;
Figure 18A is a cross-sectional view through a link for a torque control mechanism according to another exemplary embodiment
Figure 18B is an end view of the link of Figure 18A in the direction of arrow A;
Figure 19 is a detail view of a link of a further exemplary embodiment;
Figure 20 is a cross- sectional view through a link for a torque control mechanism according to another exemplary embodiment; and
Figure 21 is a schematic view of hydraulic and control circuits for a wind turbine according to an exemplary embodiment.

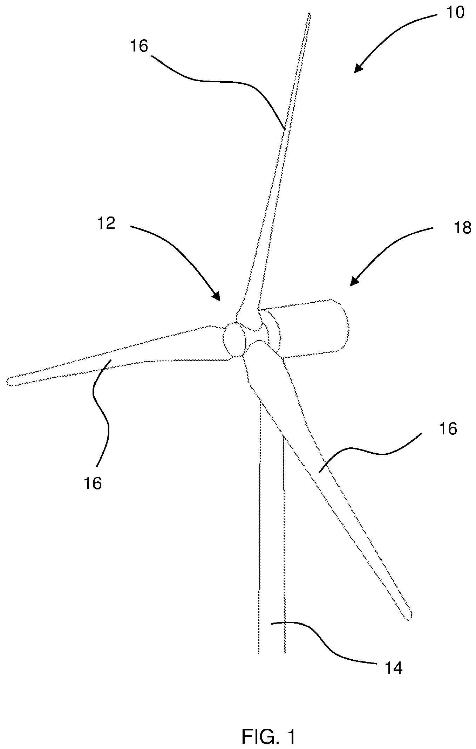

Referring firstly to Figure 1, a wind turbine is indicated generally at 10. The wind turbine 10 has a rotor 12 supported the upper end of a mast 14. The rotor 12 includes a plurality of blades 16, and is intended to rotate in order to drive an electrical generator forming part of a driveline 18 of the wind turbine.

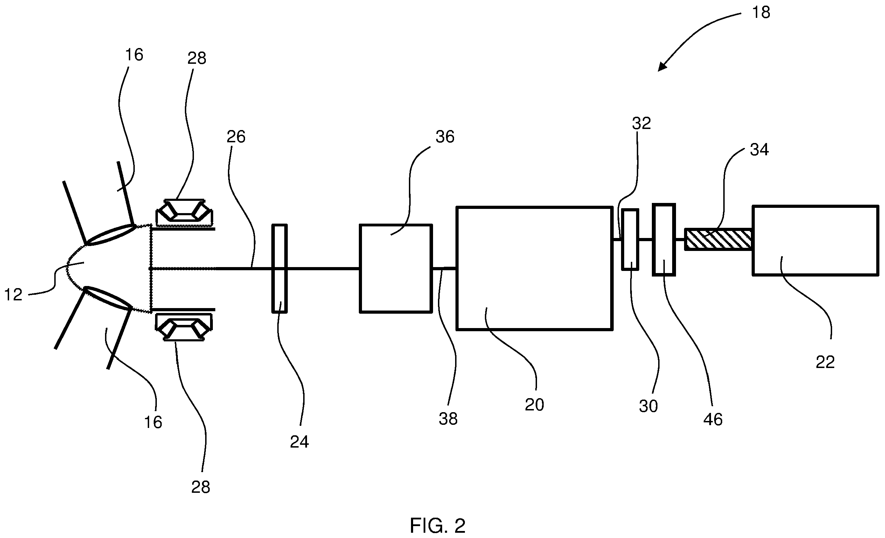

An exemplary embodiment of a driveline 18 for a wind turbine 10 is shown in schematic form in Figure 2. In the embodiment of Figure 2, the wind turbine 10 is of a 'geared' type, and so includes a gearbox 20 in communication between the rotor 12 and the electrical generator 22.

The driveline 18 of this embodiment includes a holding brake 24 arranged and configured to act on a rotor shaft 26 extending between the rotor 12 and the gearbox 20 (e.g. for locking the rotor shaft 26 against rotation). The rotor shaft 26 is rotatable in at least one bearing 28. Typically, the holding brake 24 is a positive locking device that is applied once the rotor 12 is stationary (for example a pin or pawl device).

The driveline 18 of this embodiment further includes an emergency brake 30 arranged and configured to act on a gearbox output shaft 32 (e.g. for preventing transmission of torque to the electrical generator 22). Typically, the emergency brake 30 will take the form of a disc brake device. A flexible coupling 34 is provided between the emergency brake 30 and the electrical generator 20, in order to permit limited misalignment between the gearbox 18 and generator 20.

A torque control mechanism 36 is provided between the rotor 12 and the gearbox 20. More particularly, the torque control mechanism 36 acts between the rotor shaft 26 and a gearbox input shaft 38. The gearbox input shaft 38 is supported in position by bearings (not shown) as it extends into the gearbox 20.

In use, rotation of the rotor 12 (e.g. in response to wind acting on the blades 16) causes the rotor shaft 26 to rotate in bearings 28. Load is transmitted from the rotor shaft 26 to the gearbox 20 via the torque control mechanism 28 and the gearbox input shaft 38.

As will be described in more detail below, the torque control mechanism 36 is operable to inhibit the transfer of non-torque load from the rotor 12 to the gearbox 20, and to control the level of torque transferred from the rotor 12 to the gearbox 20, as described in further detail below.

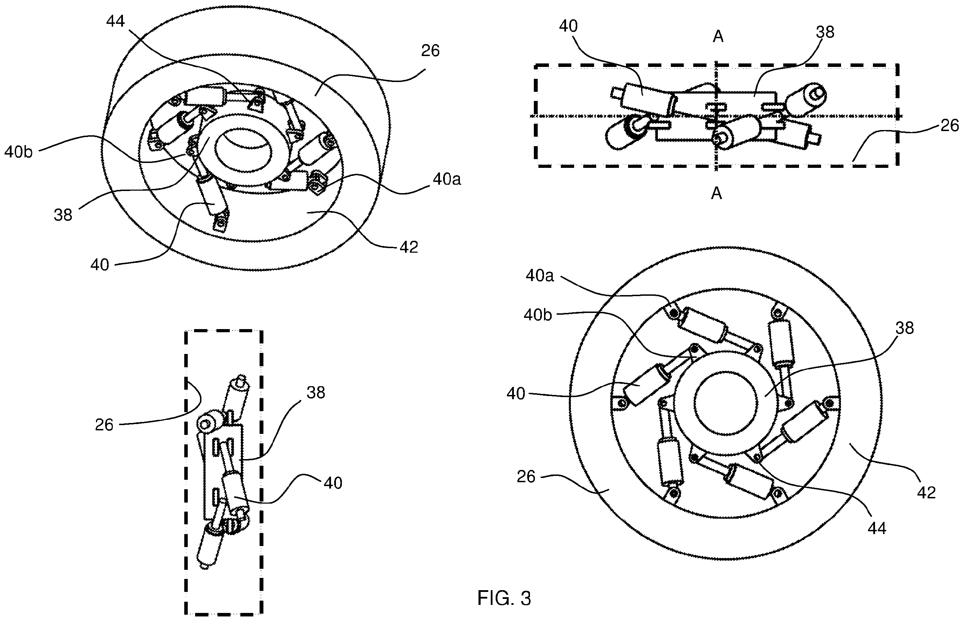

An exemplary embodiment of a torque control mechanism 36 for use in a wind turbine of the invention is shown in Figure 3 in a first, unloaded state.

In this embodiment, the gearbox input shaft 38 extends within the rotor shaft 26, so that when the torque control mechanism 36 is in a first, unloaded state, the shafts 26, 38 are coaxial, i.e. a longitudinal axis of the rotor shaft 26 is aligned with a longitudinal axis A of the gearbox input shaft 38.

The torque control mechanism 36 of this embodiment has a number of links 40 extending between the rotor shaft 26 and the gearbox input shaft 38. Each link 40 has a first end 40a and a second end 40b. Each first end 40a is pivotably connected to the rotor shaft 26 at a respective first pivot point 42. Each second end 40b is pivotably connected to the gearbox input shaft 38 at a respective second pivot point 44. The ends 40a, 40b being pivotably connected to the shafts 26, 38 means that the ends 40a, 40b can be rotated with respect to the shaft to which they are connected, and can move independently of the shaft to which they are connected. The pivotable connections mean that the links 40 are well-suited to their arcuate installation between the shafts 26, 38.

In exemplary embodiments, spherical joints are provided at the pivot points 42, 44, allowing pivoting of the links 40 in multiple directions. Alternative embodiments may include other types of pivotable joint at the pivot points.

The links 40 are variable in length, which (due to the pivotable connections to each shaft 26, 38) allows for angular, radial, axial, and rotational displacement between the shafts 26,38.

In this embodiment, the links 40 are actuators (e.g. linear actuators) configured to allow controlled adjustment of the link length. The displacement between the shafts 26, 38 can thus be controlled by operation of the actuators to vary the lengths of the links 40. More particularly, the links 40 take the form of hydraulic cylinders, e.g. of the kind having a cylinder body and a piston arranged for axial movement (in and out) with respect to the cylinder body.

In this embodiment, each cylinder 40 is arranged to act in compression during normal operation (but may go into 'tension' during torque reversal periods). The pivotable connections at the ends of the links 40 allow them to act in compression or tension at a range of angles.

In this embodiment, the torque control mechanism 36 has six cylinders 40 arranged at equidistant points about the circumference of the shafts 26, 38.

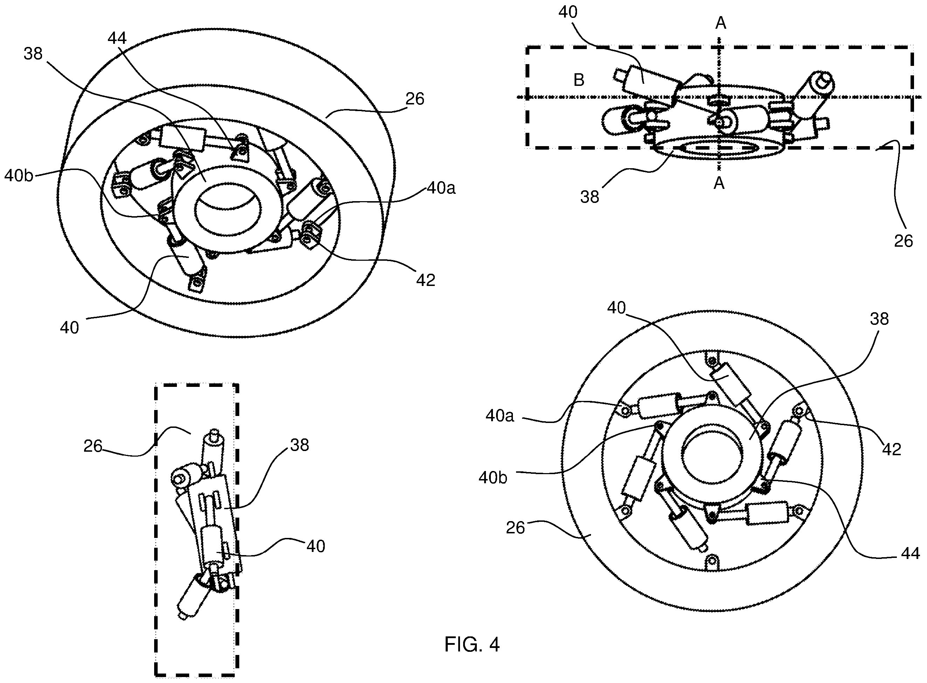

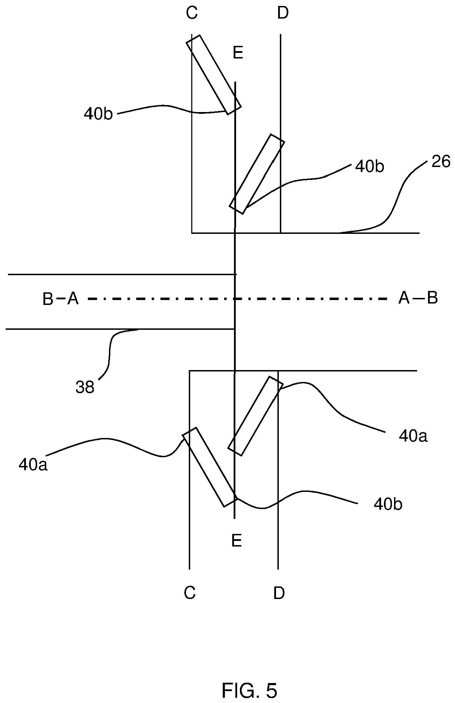

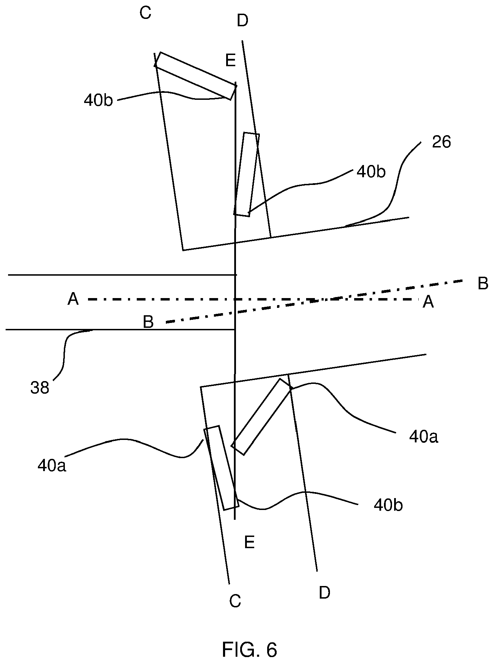

In the embodiment of Figures 3 and 4, the cylinders 40 are arranged at an angle of inclination to an axis running perpendicular to the longitudinal axis A of the shafts 26, 38 when the mechanism 36 is in an unloaded state. This is indicated more clearly in Figures 5 and 6. Figure 5 shows the torque control mechanism an unloaded state, in which three of the cylinders 40 (i.e. every alternate cylinder 40) have their first ends 40a aligned in a first rotor shaft plane C substantially perpendicular to the axis A. The remaining three cylinders 40, have their first ends 40a aligned in a second rotor shaft plane D parallel to the first plane C and axially off-set therefrom. In this embodiment, the planes C and D are offset by approximately 200mm, though in alternative embodiments other suitable offset distances may be used. The second ends 40b of all of the cylinders are aligned in a third plane E. In the unloaded state, plane E is substantially parallel to the rotor shaft planes C and D. More particularly, plane E is substantially midway between the planes C and D, i.e. substantially 100mm from both. Figure 6 shows an example of the torque control mechanism in a loaded state, in which the gearbox shaft plane E is at an angle to the planes C and D, and the cylinders 40 have moved accordingly.

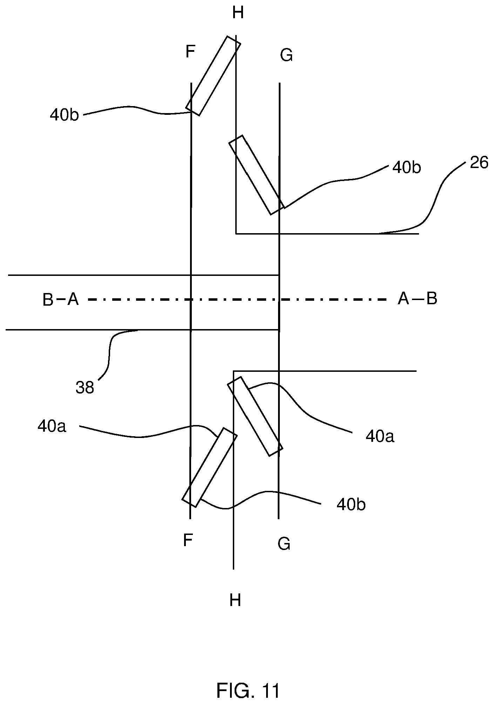

In the illustrated embodiment of Figures 3 to 5, the pistons are pivotably connected to the gearbox input shaft 38 and the cylinder bodies are pivotably connected to rotor shaft 26. However, this arrangement may be reversed for one or more of the cylinders (i.e. with one or more of the pistons pivotably connected to the rotor shaft). An example is shown in Figure 11, where three of cylinders 40 (i.e. every alternate cylinder 40) have their second ends 40b aligned in a drive shaft plane F substantially perpendicular to the axis A, and the remaining three cylinders 40 have their second ends 40b aligned in a second drive shaft plane G parallel to the first plane F and axially off-set therefrom. The first ends 40a of all of the cylinders are aligned in a first rotor shaft plane H. In the unloaded state, rotor shaft plane H is substantially parallel to the drive shaft planes F and G, and is substantially midway therebetween.

The wind turbine may include a control system to allow the actuator forces (e.g. the pressure of each cylinder 40) to be independently controlled.

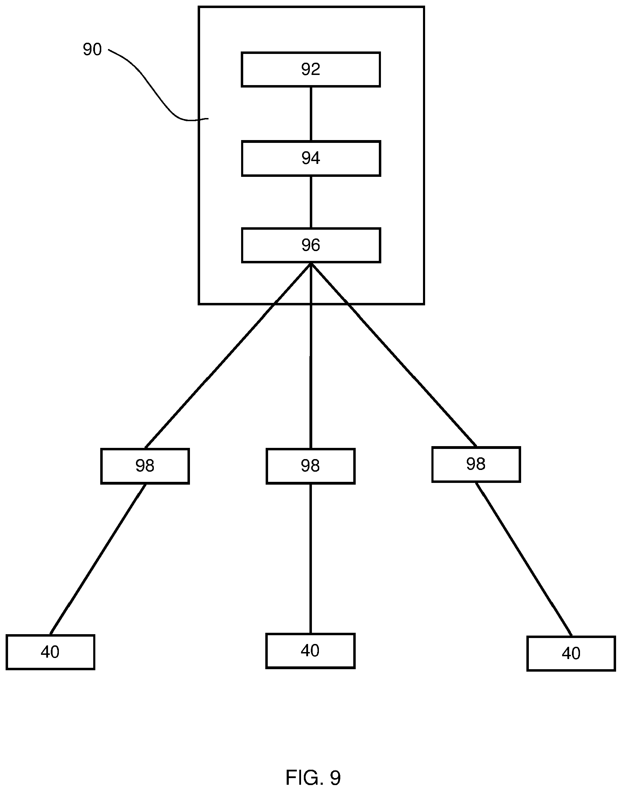

An example control system 90 is illustrated schematically in Figure 9.

According to one mode of operation, the control system 90 can be used to ensure that 'torque only' loads are transmitted to the gearbox input shaft 38 from the rotor shaft 26.

In this 'torque only' mode, the control system is configured to receive data from sensors 92 positioned within the wind turbine, and the control system 90 includes a feedback controller 94 for controlling cylinder pressure in response to data from the sensors 92.

In exemplary embodiments, the wind turbine includes one or more sensors 92 arranged to measure the pressure within each cylinder. In addition or alternatively, the wind turbine may include one or more sensors arranged to measure the position of travel of each cylinder piston (or length sensors to determine the overall length or a change in length of each cylinder). Such sensors may take the form of actuator displacement sensors.

In one exemplary method, the feedback controller 94 is programmed to use data from the sensors 92, in order to calculate or estimate the degree of misalignment (i.e. the angular displacement) between the longitudinal axis of the rotor shaft and the gearbox input shaft. An algorithm is then applied to calculate the changes in individual cylinder pressures or changes in individual actuator displacement/cylinder length required to ensure that only pure torque loads are transferred to the gearbox via the gearbox input shaft (i.e. to cancel 'off-axis' loads). In response to the calculations of the feedback controller 94, the control system 90 then operates a hydraulic circuit 96 (e.g. via one or more valves 98) in order to adjust the cylinders 40 accordingly (e.g. extend or retract, and by how much). In exemplary embodiments, the control system 90 is configured so that the output to the hydraulic circuit is modified to compensate for friction coefficients and/or other constants representing characteristics inherent within the drive train.

The control system 90 can address the required levels of misalignment between the longitudinal axis of the rotor shaft 26 and the gearbox input shaft 38. Levels of misalignment of up to 8° can be addressed by the control system 90.

According to another mode of operation, the control system 90 can be used to limit spikes in torque being transmitted to the gearbox input shaft 38, by adjusting cylinder pressures to control relative rotation between the shafts 26, 38. This functionality allows pitch control systems (e.g. as described on page 1) sufficient time to respond and decrease the aerodynamic torque being applied to the rotor.

In normal use, the wind turbine driveline will be intended to operate below its rated torque level. During a high torque period, in this 'torque truncation' mode, the control system 90 is configured to operate the torque control mechanism as a spring or damper, i.e. in order to 'soak up' excess torque applied to the rotor shaft (e.g. in response to a severe gust of wind). In such instances, the gearbox input shaft will lag the rotor shaft, and the torque control mechanism is configured to allow relative differences in shaft rotation, up to a predetermined level. In this embodiment, the relative difference in shaft rotation can be from 0° to 30°. This considerable relative difference in rotation is provided by the links 40 being pivotably connected to the shafts 26, 38. A relative difference in rotation of 30° allows the torque control mechanism to deal with significant excess torque.

Again, in this mode of operation, the feedback controller 94 is configured to receive data from sensors 92 positioned within the wind turbine (e.g. sensors to measure cylinder length or cylinder pressure), in order to estimate a differential in rotor shaft speed vs gearbox input shaft speed. An algorithm is then applied in order to determine the change in torque demand, and to operate the hydraulic circuit 96 and adjust the cylinders 40 accordingly, in order to limit the transfer of torque spikes to the gearbox. Again, the control system 90 may be configured to compensate for friction coefficients and/or other constants representing characteristics inherent within the drive train.

Excess energy produced during the limitation of torque can be absorbed by accelerating the rotor blades 16. The remainder can be rejected as a flow of pressurised hydraulic fluid (e.g. to be stored or rejected as heat).

The torque only and torque truncation modes may be run independently or in conjunction with one another.

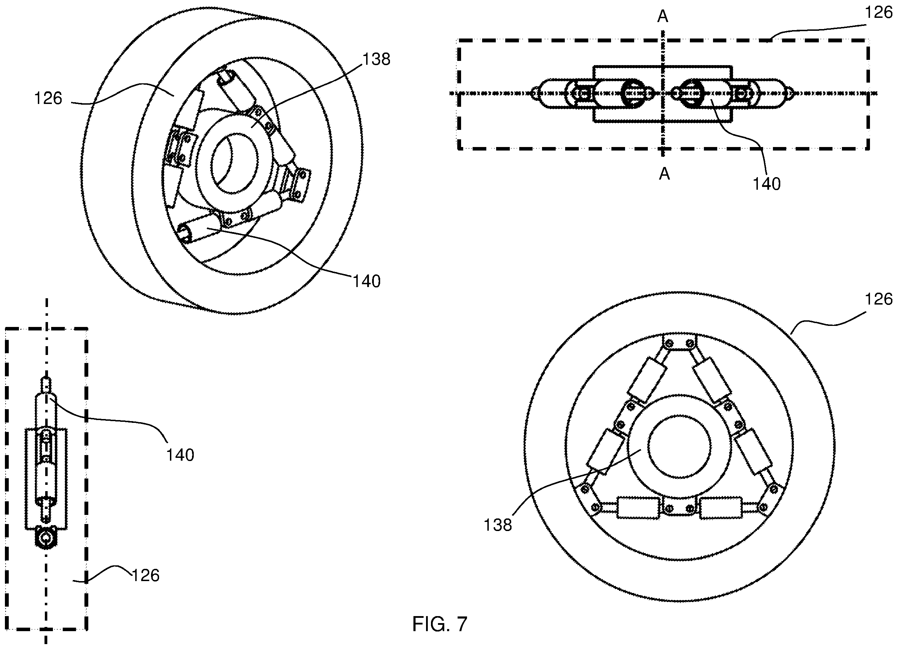

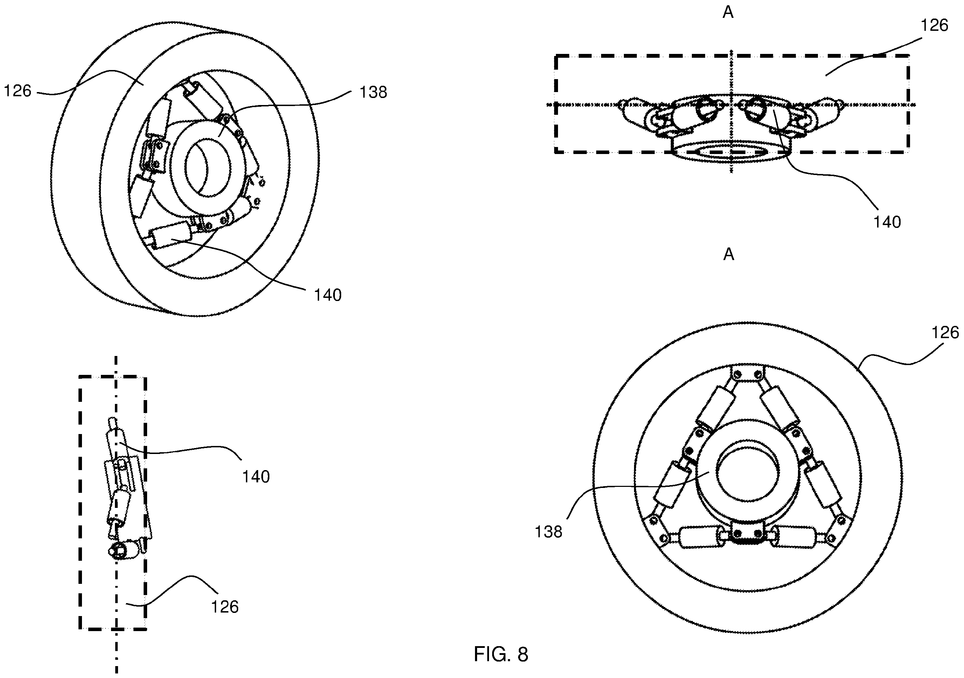

A torque control mechanism according to a further embodiment of the invention is shown in Figures 7 and 8. Features corresponding to those of the previous embodiments have been given corresponding reference numbers with the additional prefix "1". Only features that differ from those of the first embodiment are discussed in more depth.

The cylinders 140 of this embodiment are arranged in a different configuration to those of the previous embodiment. Here, six cylinders 140 are arranged in pairs, with the first end 140a of two cylinders 140 arranged proximal to one another, and the second end 140b of each of those cylinders 140 arranged proximal the second end 140b of a cylinder 140 of an adjacent pair.

Again, each hydraulic cylinder 140 has a cylinder body and a piston arranged for axial movement with respect to the cylinder body. In this embodiment, each piston is pivotably connected to the rotor shaft 126 and each cylinder body is pivotably connected to the gearbox input shaft 138. However, this arrangement may be reversed for one or more of the cylinders, (i.e. with one or more of the pistons pivotably connected to the gearbox input shaft).

In this embodiment, the first and second ends 140a, 140b are aligned in a plane substantially perpendicular to the axis A when the torque control mechanism 136 is in an unloaded state, e.g. as shown in Figure 7.

As shown in Figure 8, as in the previous embodiment, when load is supplied to the rotor shaft 126 the cylinders 140 allow angular, radial, axial, and rotational displacement of the rotor shaft in relation to the gearbox input shaft 138.

In this embodiment, alternate cylinders 140 in each pair act in compression and tension during normal operation (but may go into tension/compression during torque reversal periods). The torque control mechanism 136 of this embodiment can thus act passively, without requiring cylinder pressure control, in order to allow only torque loads to be transmitted from the rotor shaft 126 to the gearbox input shaft 138. This arrangement significantly inhibits non-torque loads from being transmitted to the gearbox input shaft 138. By way of an example, with a large misalignment of 1° of angular displacement and 2mm radial and axial displacement, 0.9% of the drive torque is in the off-axis direction and the loads are close to zero.

The pressure of the cylinders 140 of this embodiment can be independently controlled as described with respect to the previous embodiment, in order to provide further inhibition of non-torque loads.

As with the previous embodiment, the cylinders 140 can be used to control relative rotation of the shafts 126, 138 in order to limit spikes in torque being transmitted to the gearbox. As with the previous embodiment, the relative difference in shaft rotation can be from 0° to 30°. Again, this considerable relative difference in rotation is provided by the links 140 being pivotably connected to the shafts 126, 138. A relative difference in rotation of 30° allows the torque control mechanism to deal with significant excess torque.

It will be understood that the torque control mechanism is only capable of sustaining limited angular displacement between the rotor shaft and drive shaft (e.g. as a function of the length of travel of the actuators). Therefore, once the actuators have been displaced by a wind gust, time is required for the mechanism to reset in readiness to truncate excess torque of further gusts.

It is foreseeable that a situation may arise in which a gust arrives during this reset period, capable of causing the mechanism to reach its limit of travel (i.e. actuator end stops), thereby risking potentially injurious loads being transmitted to the driveline. To minimise this risk, a slip device may be introduced in series between the output of the torque control mechanism and the input to the generator, capable of rotation if a predefined torque is reached. For example, the slip device may take the form of a tolerance ring applied to provide slip at a prescribed torque. Other variants may take the form of a preloaded clutch, wrap spring arrangement or fluid shear coupling (including viscous couplings).

The torque control mechanism 36, 136 of both embodiments described herein includes a slip device 46 (see Figure 2). The slip device 46 provides a back-up torque limitation functionality, operable at a higher torque load point than that provided for by the torque control mechanism 36, 136 in the torque truncation mode (e.g. if the cylinders 40 reach maximum damping capability under sustained overload conditions).

The slip device 46 takes the form of a clutch-type arrangement, allowing slip to occur if torque spikes above a predetermined level. In exemplary embodiments, the slip device 46 acts between the gearbox 20 and the generator 22, and can be part of a coupling between the gearbox 20 and the generator 22, e.g. arranged between brake 30 and the flexible coupling 34.

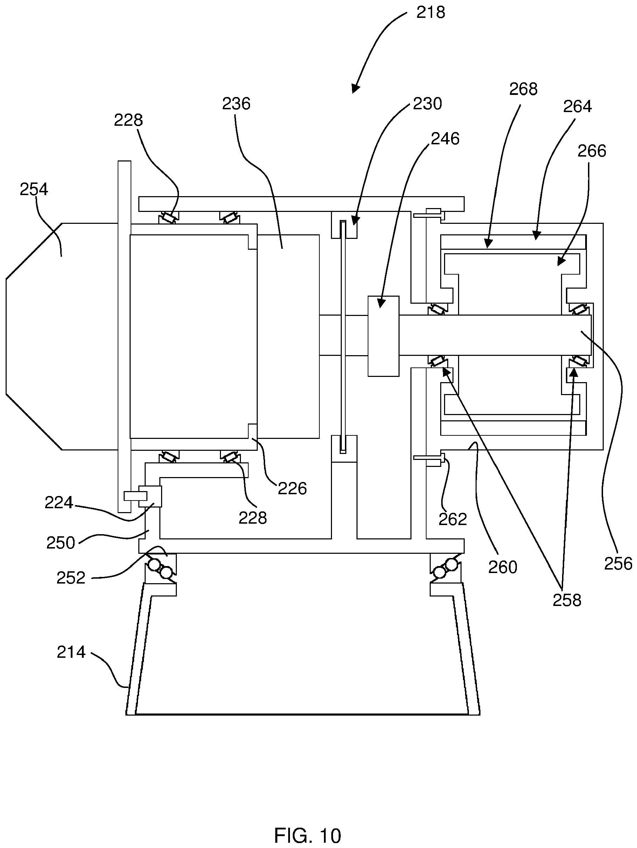

As described above, exemplary embodiments of the invention may be applied to a wind turbine of the 'geared'-type, e.g. wherein the drive shaft is a gearbox input shaft. However, exemplary embodiments of the invention may also be applied to a wind turbine having a driveline of the 'direct drive'-type, e.g. wherein the drive shaft is a generator input shaft. An example is shown at 218 in Figure 10.

Features corresponding to those of the previous embodiments have been given corresponding reference numbers with the additional prefix "2". Only features that differ from those of the previous embodiments are discussed in more depth.

In this embodiment, the rotor shaft 226 is rotatably mounted in two bearings 228 provided on a driveline main frame 250. The main frame 250 is mounted on the mast 214 via a yaw bearing 252.

A pawl type holding brake 224 is mounted on the main frame 250 for engagement with the rotor hub 254.

The torque control mechanism 236 acts between the rotor shaft 226 and a generator input shaft 256, which is rotatably mounted within two bearings 258 provided on a generator casing 260 (secured to the main frame 250, e.g. by bolts 262).

An emergency brake 230 (e.g. a disc brake device) is arranged to act on the output shaft of the torque control mechanism 236. A slip device 246 (e.g. of the kind described previously) is arranged between the brake 230 and the generator 222.

The generator 222 includes a stator 264 fixedly mounted within the housing 260, and a rotor 266 mounted for rotation with the generator input shaft 256, with an air gap 268 between the stator 264 and the rotor 266.

In use, rotation of the rotor 212 (e.g. in response to wind acting on the rotor blades) causes the rotor shaft 226 to rotate in bearings 228. Load is transmitted from the rotor shaft 226 to the generator 222 via the torque control mechanism 236. A control system, e.g. as described above with reference to Figure 9, can be used to provide 'torque only' and 'torque limitation' modes of operation. The torque control mechanism 236 may be of any kind described herein. The slip device 246 provides back-up torque limitation functionality.

The torque control mechanism 36, 136, 236 provides a combined means of inhibiting non-torque loads and limiting the level of torque transmitted to a wind turbine gearbox. The turbine driveline life is increased due to the avoidance of unwanted and/or excessive loads. In addition, the gearbox can be smaller and lighter in design, advantageously reducing mass and material usage.

The hydraulic cylinders 40, 140 provide a simple and effective means of torque control, and can simply be controlled to optimise load transmission. The arrangement of the cylinders can be configured to suit passive or active applications as required. The cylinders 40, 140 allow the torque control mechanism 36, 136 to be swiftly reset following a torque spike. An opportunity for the storing of energy is provided by energy dissipated through hydraulic fluid. Energy can be stored in hydraulic accumulators. The control system can also provide feedback to assist with identification of operation errors.

In alternative embodiments (not shown), the shafts 26, 38, 126, 138 are not co-axial when in a non-loaded state.

In alternative embodiments (not shown), the torque control mechanism 36 is integrated within a casing of the gearbox 20.

In alternative embodiments (not shown), the holding brake 24 is integrated with the torque control mechanism 36.

In exemplary embodiments, the hydraulic circuit for the torque control mechanism is powered electrically, to avoid the requirement of high pressure rotating hydraulic seals. This may be achieved by local pressure generation with a pump driven against a cam or by an electrically driven pump, for example. In the case of an electrically driven pump, it is preferable that it is driven from the same high integrity supply provided to a blade pitch control system.

In exemplary embodiments, the hydraulic circuit for the torque control mechanism is provided with a cooling system. In exemplary embodiments, one or more heat exchangers for incorporated for cooling the fluid in the hydraulic circuit, e.g. oil-air heat exchangers arranged to rotate with the system.

As mentioned previously, excess energy produced during the limitation of torque can be absorbed by accelerating the rotor blades 16. In addition or alternatively, the excess energy can be rejected as a flow of pressurised hydraulic fluid (e.g. to be stored or rejected as heat). In exemplary embodiments, accumulators are integrated in the hydraulic circuit for the torque control mechanism. Typically, the accumulators will be arranged close to the cylinders, to allow for high flow rates from the cylinder to the accumulators.

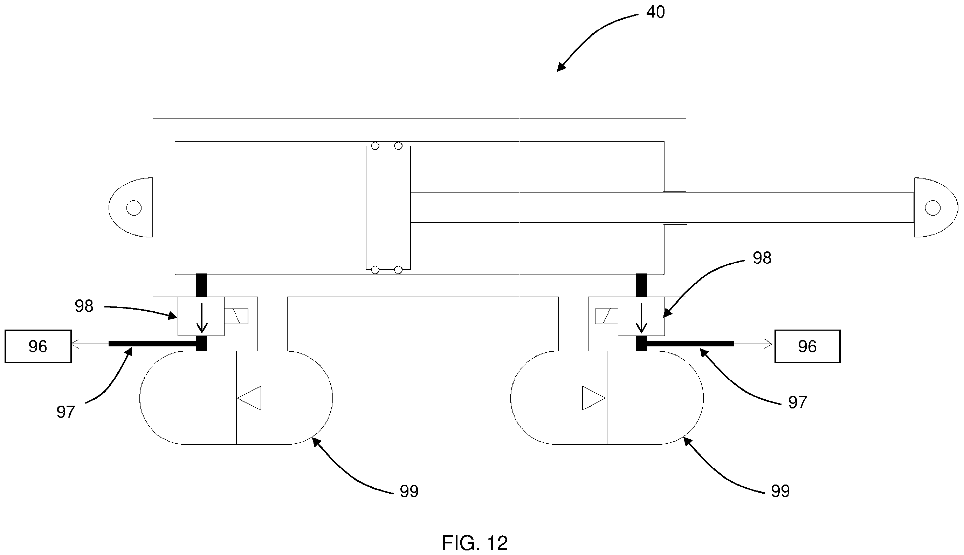

Figure 12 is a schematic diagram of an exemplary hydraulic cylinder and accumulator arrangement. Valves 98 are mounted on each hydraulic cylinder 40, to control rejection of pressurised hydraulic fluid to accumulators 99. The accumulators are mounted proximally to the cylinders 40, to allow only a short flow path of hydraulic fluid during operation. There is further provided an additional hydraulic connection 97 to the hydraulic system 96.

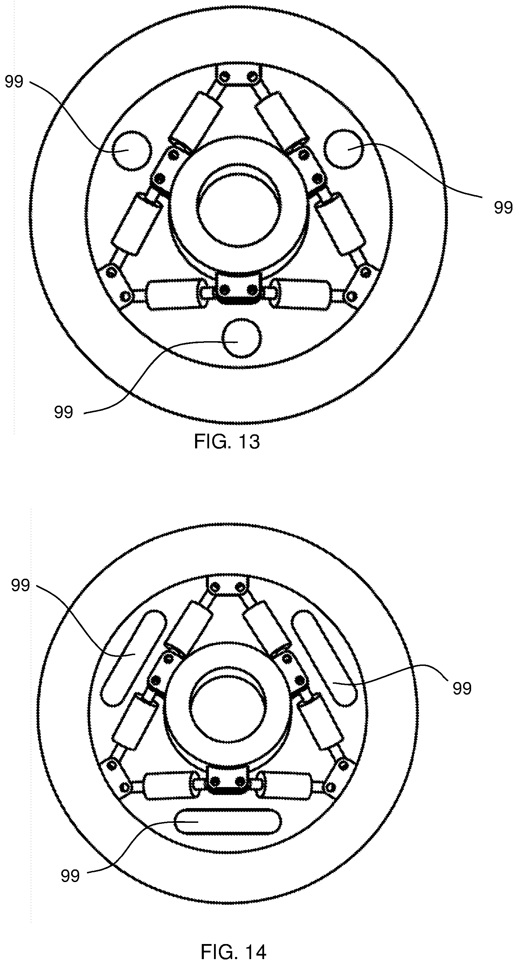

The accumulators may be located in alignment parallel with the axis of turbine hub rotation (e.g. as shown in Figure 13), or in a plane orthogonal to said axis (e.g. as shown in Figure 14). In exemplary embodiments (e.g. those with extreme limitations of space), the accumulators are tubular and located around the cylinder pistons.

In exemplary embodiments, the torque control mechanism is applied within the driveline of a wind turbine including a pitch control system and generator control system. In exemplary embodiments, the control system for the torque control mechanism is integrated with the pitch control system and generator control system, to provide an integrated torque load control system. Such a system will be capable of compensating for limitations within each sub-system, thereby providing improved load reduction capability for the turbine and mast.

In exemplary embodiments, the following sequence may be applicable if a rapid increase of drive torque is experienced:
1) The integrated control system will blend operation of the subsystems in anticipation of blade hub torque using information from LIDAR and up-wind turbines (e.g. which may be applied within a feed-forward aspect of the turbine and torque control mechanism control systems).
2) Upon the arrival of a gust, the torque control mechanism will begin to compress, typically with less control processing and mechanical response time than the pitch and generator control systems.
3) Generator torque is controlled. The generator may be driven (taking power from the grid) to accelerate its inertia (e.g. to minimise its effect during acceleration of the driveline).
4) Blade pitch control will start to react (but typically with a relatively slow response).
5) As full travel of the torque control mechanism is approached, the control system algorithm will weight further travel as unattractive (since it has finite travel limits and it is preferable to avoid contact with cylinder end stops).
6) When the gust subsides and or the pitch system has reduced torque, the torque control mechanism is able to reset (e.g. by return movement of the cylinder pistons).
7) If a successive gust arrives before a complete reset is achieved, the response of pitch control may not be sufficiently fast to react, in which case the cylinder end stops of the torque control mechanism coupling are at risk of engagement during further operation of the cylinders (which could cause a torque spike that would damage the driveline), in which case the control system is configured to operate the slip device, in order to minimise the risk of excess torque loads being transmitted to the generator.

In exemplary embodiments in which the links are hydraulic cylinders, the cylinders may include resilient end stops (e.g. of rubber) for limiting torque transmission (e.g. if limit of travel is reached in overload conditions) and damping torsional vibration. In exemplary embodiments, the end stops take the form of conical elements within the cylinder: one fixed to the closed end of the cylinder against which the piston would abut, and one fixed to the rod-end of the cylinder, through which the rod moves.

Although the illustrated embodiments show the links as hydraulic cylinders, other forms of actuator may be applicable, in particular (but not exclusively) other forms of linear actuator, such as electromagnetic devices of the 'moving magnet' kind, e.g. as described in WO2007034195, or voice coil devices.

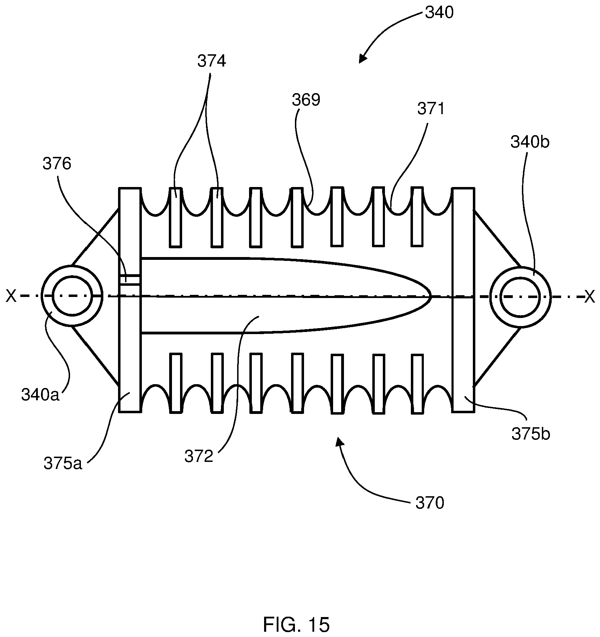

Alternative forms of actuator according to further embodiments of the invention are shown in Figures 15 to 20. Features corresponding to those of the previous embodiments have been given corresponding reference numbers with the additional prefix "3". Only features that differ from those of the previous embodiments are discussed in more depth.

The link 340 of Figure 15 comprises a hydraulically actuated device 370. The device 370 is configured to expand and contract along its longitudinal axis X, so that it is variable in length. The device 370 has a body 371 which is cylindrical in this embodiment, although the body 371 may be of other suitable shapes in alternative embodiments. The body 371 is configured to expand and contract in length, to provide expansion and contraction of the device 370. In this embodiment the body 371 is in the form of a bellows, i.e. with "concertina" radial folds 369 configured to fold and unfold to allow contraction and expansion respectively. In alternative embodiments the body 371 may be of some other form. For example, the body may be of elastomeric material.

The device 370 defines a cavity 372 configured to hold hydraulic fluid within the body 371. The length of the device 370 is varied by adjustment of the amount of hydraulic fluid held within the cavity 372. Decreasing the amount of fluid within the cavity 372 causes the cavity 372 to contract, causing the body 371 to contract along its longitudinal axis X and thus causing the device 340 to decrease in length. Increasing the amount of fluid within the cavity 372 causes the cavity 372 to expand, causing the body 372 to expand along its axis X, and thus causing the device 340 to lengthen.

As with previous embodiments, device has a first end 340a and a second end 340b, each configured for pivotable connection to a respective rotor shaft or gearbox input shaft. In this embodiment, the device 370 comprises a first end cap 375a and a second end cap 375b configured to seal the respective ends of the body 371. The first end cap 375a defines an inlet 376 for the flow of hydraulic fluid in and out of the cavity 372. The ends 340a and 340b extend in this embodiment from the end caps 374a, 375b to provide means for pivotable connection to the rotor and gearbox input shafts. Either end 340a, 340b can be attached to either the rotor shaft or the gearbox input shaft.

The device 370 further comprises a series of annular supports 374. The annular supports 374 are axially spaced along the body 371, with, in this embodiment, a support 374 located at each fold 369. The supports 374 reinforce the body 371.

Such an actuator is not likely to be subject to localised wear, increasing the relative life of the actuator. The life of this form of actuator is likely to be the life of a turbine, reducing the need for replacement and maintenance.

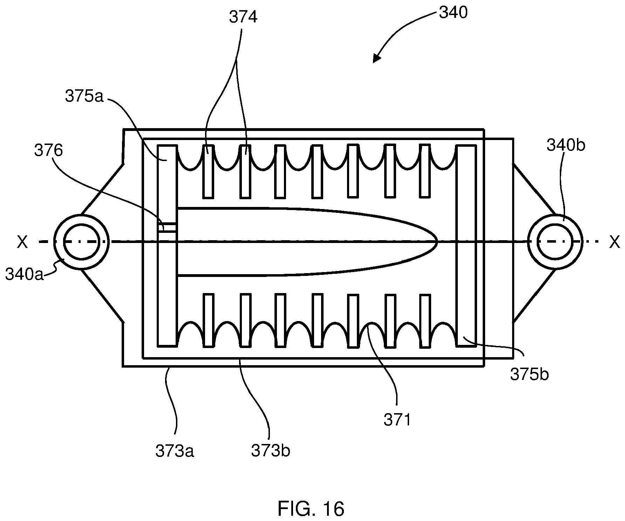

Figure 16 shows a device 370 similar to that of Figure 15. The device 370 of this embodiment comprises first and second concentric tubular guides 373a, 373b extending about the body 371. The guides 373 are configured to support the body 371 as it expands and contracts along its axis X. In this embodiment the guides 373a, 373b extend proximal to the annular supports 374, and provide support to the body 371 via the annular supports 374.

The first guide 373a is connected to the first end 340a, and means for pivotable connection of the first end 340a to the rotor or gearbox input shaft extends from the first guide 373a. The second guide 373b is connected to the second end 340b, and means for pivotable connection of the second end 340b to the rotor or gearbox input shaft extends from the second guide 373b. In this embodiment, the second guide 373b extends within the first guide 373a, though in alternative embodiments the first guide 373a may extend within the second guide 373b.

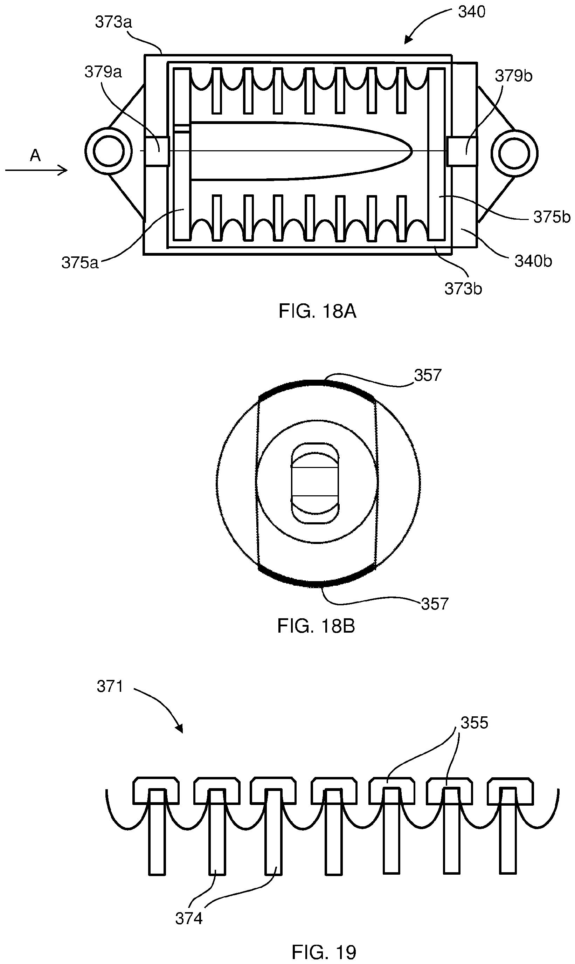

In this embodiment, the guides 373a, 373b are partial tubes. Each guide 373a, 373b has two opposing arcuate arms 357 (see Figure 18B) extending axially along the length of the device 340 and configured to interlock with the arms of the remaining guide 373b, 373a. Each arm 357 extends in an arc of approximately 40°, though in alternative embodiments the arms may extend in greater or lesser arcs. For example, the arms may extend in arcs of approximately 90°, and /or the guides may be of the same diameter, so that the body 371 is surrounded by the guides 373a, 373b.

The guides 373a, 373b in particular improve lengthening of the device 340, as the guides 373a, 373b ensure that expansion of the body 371 takes place along the axis X.

In this embodiment, the guides 373 define vents configured to allow airflow around the device 370 for cooling. In alternative embodiments (not shown), the guides 373 may fully enclose the body 371.

In alternative embodiments, the guides are not tubular, but may be of some other suitable shape configured to provide support to the body 371.

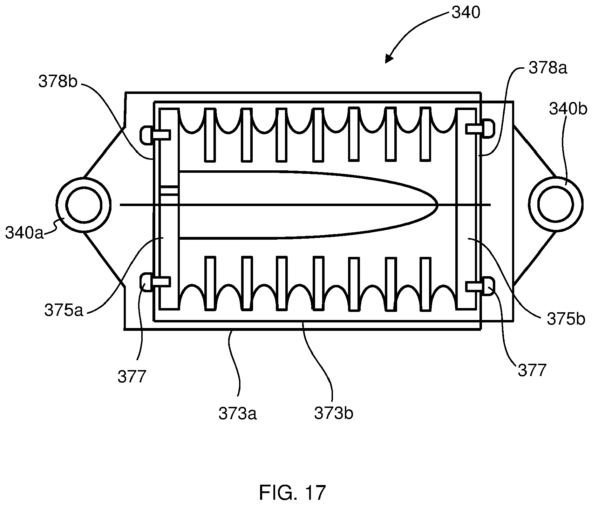

Figure 17 shows a device 340 similar to that of Figure 16. In this embodiment, the guides 373a, 373b are attached to the body 371. Each guide 373a, 373b has a respective end 378a, 378b distal its respective device end 340a, 340b. That is, the first guide 373a has an end 378a that extends beyond the body 371 towards the device second end 340b. The second guide 373b has an end 378b that extends beyond the body 371 towards the device first end 340a. The first guide end 378a is parallel to and attached to the second end cap 375b. The second guide end 378b is parallel to and attached to the first end cap 375a. In this embodiment, fasteners 377 are used to secure the ends 378a, 378b to the end caps 375b, 375a.

Attaching the guides 373a, 373b to the end caps 375a, 375b in particular improves contraction of the device 340. As fluid is removed from the cavity 372, and the body 371 contracts accordingly, the end caps 375a, 375b are drawn together. The attachment of the guides 373a, 373b to the end caps 375a, 375b ensures that the guides 373a, 373b are drawn together with the end caps 375a, 375b. The first and second ends of the device 340a, 340b, being connected to the guides 373a, 373b, are thus also drawn together.

Figure 18A shows a similar embodiment to that of Figure 16, with an additional member 379a extending through a corresponding aperture (not shown) in the first guide 373a to the respective first end cap 375a. The member 379a is configured to apply compressive load to the body 371 via the end cap 375a, to cause contraction of the device 340. A corresponding member 379b extends through a corresponding aperture (not shown) in the second guide 373b, to apply compressive load to the body 371 via the second end cap 375b.

Figure 19 shows a side of the body 371 with the annular supports 374. In this embodiment, the supports 374 carry low-friction shoes 355. The shoes 355 clip over the supports 374 and are configured to prevent or at least inhibit tilting of the supports 374 with respect to the axis X. The shoes 355 of this embodiment are over-moulded with self-lubricating plastic. The shoes 355 of this embodiment are arcuate. In alternative embodiments, the shoes 355 may be annular.

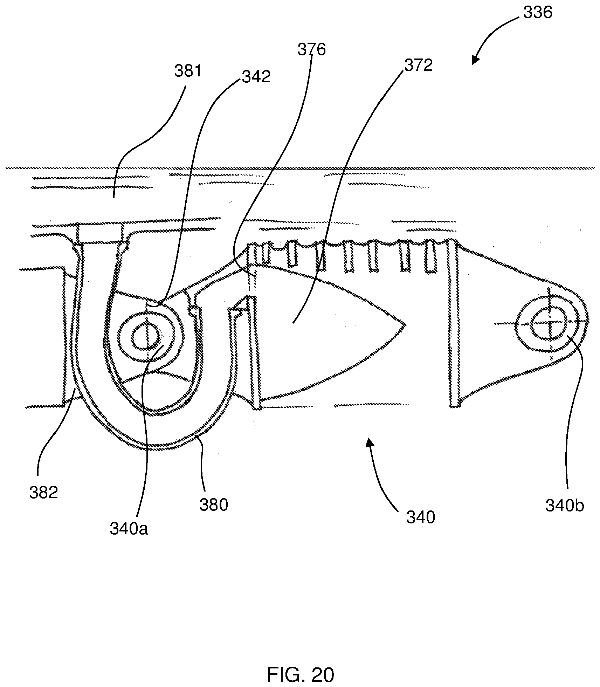

Figure 20 shows the device 340 as part of the torque control mechanism 336. The device 340 is pivotably connected to a coupling 382 at the pivot point 342. The cavity 372 is in fluid communication with an annular hydraulic gallery 381 via a hose 380. The hose 380 extends in an arc around the pivot point 342 to reach the cavity inlet 376, advantageously minimising the volume required. In addition, this arrangement of the hose 380 minimises flexure of the hose 380 and stressing of the hose 380 for a given articulation of the device 340, and so improves durability of the hydraulic circuit.

The link layouts of the previous embodiments can be applied to the device 340 of these embodiments.

As with previous embodiments, the pivotable connections of the device 340 allow a considerable relative difference in shaft rotation, i.e. a range of between 0° and 30°.

The torque control mechanism 336 of this embodiment is operated to prevent overload of the gearbox. The torque control mechanism may function with a (known) condition monitoring system (not shown) which may instruct reduced limits for drive torque or specific loads control according to a damping strategy. Such a condition monitoring strategy may have inputs according to gear condition (e.g. acoustic emission sensors, inductive sensors or torque sensors) and bearing condition (e.g. ultrasonic oil-film measurement, ultrasonic load determination or acoustic emissions).

The torque control mechanism of this embodiment truncates torque in both clockwise and counter-clockwise directions, and prevents or at least inhibits transmission of other moments and axial forces. The device can react immediately to wind gusts, providing sufficient time for the relatively slow-responding blade pitch system to actuate to reduce drive torque, and for the generator to be controlled to reduce both its electromagnetic torque and its inertial effect. This is an improvement over existing devices, which, although they may offer load isolation and limited damping, have restricted angular displacement, which does not provide sufficient time for actuation of the pitch system.

The torque control mechanism can be used for other applications than wind. For example, the torque control mechanism may be used with marine propeller shafts or mining equipment, subject to overloads.

The torque control mechanism allows protection of existing equipment. Additionally, the torque control mechanism allows the downsizing of new equipment, as excess safety factors can be eliminated.

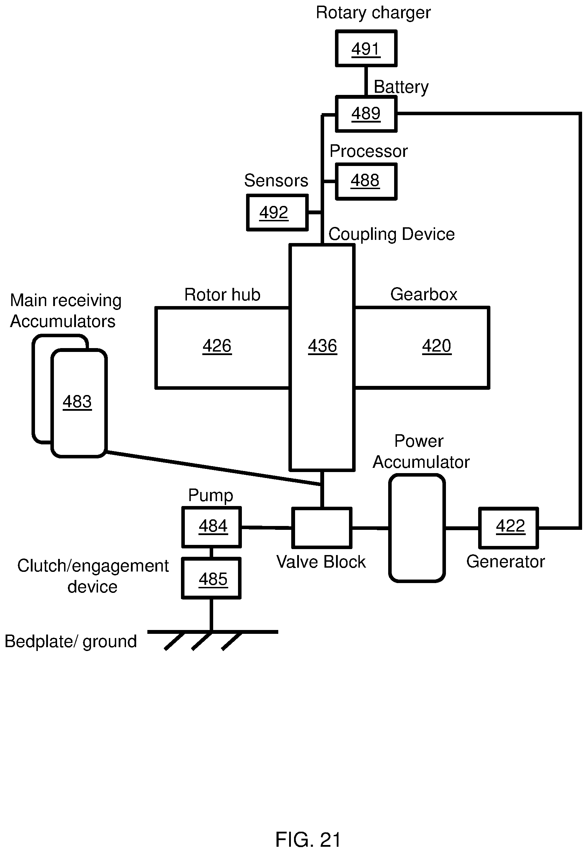

An example of a circuit of hydraulic and control elements is shown in Figure 21. Features corresponding to those of the previous embodiments have been given corresponding reference numbers with the additional prefix "4". Only features that differ from those of the previous embodiments are discussed in more depth.

Hydraulic, electrical, mechanical and other types of connections are denoted in Figure 21 by similar lines. The type of connection is indicated by the type of connected components.

In this embodiment, hydraulic control can be applied, as an alternative to a passive mode of operation. The accumulators 483 of this embodiment rotate with the torque control mechanism 336. This arrangement is optimal for the required high flow rates of the hydraulic circuit. This arrangement requires computing elements such as the sensors 492 and the processor 488 to rotate with the accumulators 483. The sensors 492 and the processor 488 are therefore self-powering. A hydraulic pump 484 is connected to a ground element via an engagement device 485. In this embodiment, the engagement device is a clutch 485. Power from the ground element is fed to a generator 422 to provide electrical power.

The circuit also includes a rotary charger 491 configured to harvest energy from rotation. The circuit also includes a battery 489 configured to store energy from the connected rotary charger 491, as an additional power supply. The rotary charger 491 may be of the type used in tyre pressure monitoring systems.

In an alternative embodiment, hydraulic or electrical power is taken from the pitch control system.

In an alternative embodiment, the accumulators are connected to the torque control mechanism via slipping high pressure connections.

Advantages of the invention are applicable to other types of rotating machinery, e.g. where it may be desirable to protect the machinery from excess torque and/or non-torque forces and moments.

## Claims

1. A wind turbine (10) comprising:
a rotor shaft (26) configured for operation by a rotor (12);
a drive shaft (38) configured to be driven by the rotor shaft (26); and
a generator (22) driven by the drive shaft (38);
a torque control mechanism (36) provided between the rotor shaft (26) and the drive shaft (38);
wherein the torque control mechanism (36) comprises at least two links (40) extending between the rotor shaft (26) and the drive shaft (38), the links (40) having a first end (40a) and a second end (40b), and wherein the length of each link (40) is variable; and
**characterised in that** the first end (40a) is pivotably connected to the rotor shaft (26) and the second end (40b) is pivotably connected to the drive shaft (38).

2. A wind turbine (10) according to claim 1 wherein the links (40) are linear actuators configured to allow for controlled length adjustment.

3. A wind turbine (10) according to claim 1 or claim 2 wherein the links (40) are hydraulic cylinders, each having a cylinder body and a piston arranged for axial movement with respect to the cylinder body.

4. A wind turbine (10) according to claim 3 wherein the cylinders are configured to act in compression during normal operation.

5. A wind turbine (10) according to claim 3 or claim 4 wherein the torque control mechanism (36) has an unloaded state in which the rotor shaft (26) is coaxial with the drive shaft (38).

6. A wind turbine (10) according to claim 5 wherein the cylinders are arranged at an angle of inclination relative to an axis perpendicular to a longitudinal axis of the drive shaft (38) in the unloaded state.

7. A wind turbine (10) according to any of claims 3 to 6, further comprising a control system for the torque control mechanism (36), for controlling the hydraulic pressure of each cylinder, preferably wherein the wind turbine (10) includes sensors (92) to provide feedback to the control system (90), more preferably wherein the sensors (92) comprise actuator displacement sensors, at least one for each cylinder.

8. A wind turbine (10) according to claim 7 wherein the control system comprises a feedback controller (94), which calculates required cylinder forces based on data from the sensors (92).

9. A wind turbine (10) according to claim 3 wherein the torque control mechanism (36) comprises a combination of hydraulic cylinders configured to act in compression and tension during normal operation, preferably wherein the torque control mechanism (36) has an unloaded state in which the rotor shaft (26) is coaxial with the drive shaft (38), more preferably wherein the cylinders are aligned along an axis perpendicular to a longitudinal axis of the drive shaft (38) in the unloaded state.

10. A wind turbine (10) according to any of claims 1 to 9 wherein the torque control mechanism (36) comprises at least six links (40), and wherein said at least six links (40) comprises six hydraulic cylinders configured to act in compression during normal operation.

11. A wind turbine (10) according to any of claims 1 to 9 wherein the torque control mechanism (36) comprises at least six links (40), and wherein said at least six links (40) comprises three pairs of hydraulic cylinders, wherein a first cylinder in each pair is configured to act in compression during normal operation and a second cylinder in each pair is configured to act in tension during normal operation.

12. A wind turbine (10) according to any preceding claim wherein each pivotable connection between the links (40) and the respective rotor shaft (26) or drive shaft (38) comprises a spherical joint or ball joint.

13. A wind turbine (10) according to any preceding claim, further comprising a clutch-type slip device (46) arranged between the drive shaft (38) and the generator (22), for protecting the generator at predetermined torque load conditions, preferably wherein the wind turbine (10) comprises a gearbox (20) arranged between the drive shaft (38) and the generator (22), and wherein the slip device (46) is arranged between the gearbox (20) and the generator (22), to allow slip between an output shaft of the gearbox (20) and an input shaft of the generator (22) above predetermined torque levels, more preferably wherein a brake device is arranged to act on the output shaft of the gearbox (20), and wherein the brake device is provided between the gearbox (20) and the slip device (46).

14. A wind turbine (10) according to any preceding claim wherein each link (40) is a hydraulically actuated device configured to expand or contract along a longitudinal axis.

## Patentansprüche

1. Windturbine (10), umfassend:
eine Rotorwelle (26), die zum Betrieb durch einen Rotor (12) konfiguriert ist,
eine Antriebswelle (38), die so konfiguriert ist, dass sie von der Rotorwelle (26) angetrieben wird, und
einen Generator (22), der von der Antriebswelle (38) angetrieben wird,
eine Mechanik zur Drehmomentregelung (36), die zwischen der Rotorwelle (26) und der Antriebswelle (38) vorgesehen ist,
wobei die Mechanik zur Drehmomentregelung (36) mindestens zwei Verbindungsglieder (40) umfasst, die sich zwischen der Rotorwelle (26) und der Antriebswelle (38) erstrecken, wobei die Verbindungsglieder (40) ein erstes Ende (40a) und ein zweites Ende (40b) aufweisen, und wobei die Länge jedes Verbindungsglieds (40) variabel ist, und
**dadurch gekennzeichnet, dass** das erste Ende (40a) schwenkbar mit der Rotorwelle (26) verbunden ist und das zweite Ende (40b) schwenkbar mit der Antriebswelle (38) verbunden ist.

2. Windturbine (10) nach Anspruch 1, wobei die Verbindungsglieder (40) Linearaktuatoren sind, die so konfiguriert sind, dass sie eine kontrollierte Längeneinstellung ermöglichen.

3. Windturbine (10) nach Anspruch 1 oder Anspruch 2, wobei die Verbindungsglieder (40) Hydraulikzylinder sind, die jeweils einen Zylinderkörper und einen Kolben aufweisen, der für eine axiale Bewegung in Bezug auf den Zylinderkörper angeordnet ist.

4. Windturbine (10) nach Anspruch 3, wobei die Zylinder so konfiguriert sind, dass sie im Normalbetrieb durch Druck wirken.

5. Windturbine (10) nach Anspruch 3 oder Anspruch 4, wobei die Mechanik zur Drehmomentregelung (36) einen unbelasteten Zustand aufweist, in dem die Rotorwelle (26) koaxial mit der Antriebswelle (38) angeordnet ist.

6. Windturbine (10) nach Anspruch 5, wobei die Zylinder im unbelasteten Zustand in einem Neigungswinkel relativ zu einer Achse senkrecht zu einer Längsachse der Antriebswelle (38) angeordnet sind.

7. Windturbine (10) nach einem der Ansprüche 3 bis 6, weiter umfassend ein Steuerungssystem für die Mechanik zur Drehmomentregelung (36), zum Steuern des Hydraulikdrucks jedes Zylinders, wobei bevorzugt die Windturbine (10) Sensoren (92) aufweist, die dem Steuerungssystem (90) ein Feedback bereitstellen, wobei besonders bevorzugt die Sensoren (92) Aktuatorabstandssensoren umfassen, mindestens einen für jeden Zylinder.

8. Windturbine (10) nach Anspruch 7, wobei das Steuerungssystem eine Feedbacksteuerung (94) umfasst, die die erforderlichen Zylinderkräfte ausgehend von Daten von den Sensoren (92) berechnet.

9. Windturbine (10) nach Anspruch 3, wobei die Mechanik zur Drehmomentregelung (36) eine Kombination von Hydraulikzylindern umfasst, die so konfiguriert sind, dass sie im Normalbetrieb durch Druck und Zug wirken, wobei bevorzugt die Mechanik zur Drehmomentregelung (36) einen unbelasteten Zustand aufweist, in dem die Rotorwelle (26) koaxial mit der Antriebswelle (38) angeordnet ist, wobei besonders bevorzugt im unbelasteten Zustand die Zylinder entlang einer Achse senkrecht zu einer Längsachse der Antriebswelle (38) ausgerichtet sind.

10. Windturbine (10) nach einem der Ansprüche 1 bis 9, wobei die Mechanik zur Drehmomentregelung (36) mindestens sechs Verbindungsglieder (40) umfasst, und wobei die mindestens sechs Verbindungsglieder (40) sechs Hydraulikzylinder umfassen, die so konfiguriert sind, dass sie im Normalbetrieb durch Druck wirken.

11. Windturbine (10) nach einem der Ansprüche 1 bis 9, wobei die Mechanik zur Drehmomentregelung (36) mindestens sechs Verbindungsglieder (40) umfasst, und wobei die mindestens sechs Verbindungsglieder (40) drei Paar Hydraulikzylinder umfassen, wobei ein erster Zylinder in jedem Paar so konfiguriert ist, dass er im Normalbetrieb durch Druck wirkt, und ein zweiter Zylinder in jedem Paar so konfiguriert ist, dass er im Normalbetrieb durch Zug wirkt.

12. Windturbine (10) nach einem der vorhergehenden Ansprüche, wobei jede schwenkbare Verbindung zwischen den Verbindungsgliedern (40) und der zugehörigen Rotorwelle (26) oder Antriebswelle (38) ein sphärisches Gelenk oder Kugelgelenk umfasst.

13. Windturbine (10) nach einem der vorhergehenden Ansprüche, weiter umfassend eine kupplungsartige Schlupfeinrichtung (46), die zwischen der Antriebswelle (38) und dem Generator (22) angeordnet ist, zum Schutz des Generators bei bestimmten Drehmomentbelastungsbedingungen, wobei bevorzugt die Windturbine (10) ein Getriebe (20) umfasst, das zwischen der Antriebswelle (38) und dem Generator (22) angeordnet ist, und wobei die Schlupfeinrichtung (46) zwischen dem Getriebe (20) und dem Generator (22) angeordnet ist, um über bestimmten Drehmomentwerten einen Schlupf zwischen einer Ausgangswelle des Getriebes (20) und einer Eingangswelle des Generators (22) zu ermöglichen, wobei besonders bevorzugt eine Bremseinrichtung angeordnet ist, die auf die Ausgangswelle des Getriebes (20) wirkt, und wobei die Bremseinrichtung zwischen dem Getriebe (20) und der Schlupfeinrichtung (46) vorgesehen ist.

14. Windturbine (10) nach einem der vorhergehenden Ansprüche, wobei jedes Verbindungsglied (40) als hydraulisch betätigte Einrichtung ausgebildet ist, die so konfiguriert ist, dass sie sich entlang einer Längsachse ausdehnt oder zusammenzieht.

## Revendications

1. Turbine éolienne (10) comprenant :
un arbre de rotor (26) configuré pour le fonctionnement grâce à un rotor (12) ;
un arbre d'entraînement (38) configuré pour être entraîné par l'arbre de rotor (26) ; et
un générateur (22) entraîné par l'arbre d'entraînement (38) ;
un mécanisme de commande de couple (36) prévu entre l'arbre de rotor (26) et l'arbre d'entraînement (38) ;
dans laquelle le mécanisme de commande de couple (36) comprend au moins deux liaisons (40) s'étendant entre l'arbre de rotor (26) et l'arbre d'entraînement (38), les liaisons (40) ayant une première extrémité (40a) et une seconde extrémité (40b), et dans laquelle la longueur de chaque liaison (40) est variable ; et
**caractérisée en ce que** la première extrémité (40a) est raccordée de manière pivotante à l'arbre de rotor (26) et la seconde extrémité (40b) est raccordée de manière pivotante à l'arbre d'entraînement (38).

2. Turbine éolienne (10) selon la revendication 1, dans laquelle les liaisons (40) sont des actionneurs linéaires configurés pour permettre l'ajustement de longueur contrôlé.

3. Turbine éolienne (10) selon la revendication 1 ou la revendication 2, dans laquelle les liaisons (40) sont des cylindres hydrauliques, chacun ayant un corps de cylindre et un piston agencé pour le mouvement axial par rapport au corps de cylindre.

4. Turbine éolienne (10) selon la revendication 3, dans laquelle les cylindres sont configurés pour agir en compression pendant le fonctionnement normal.

5. Turbine éolienne (10) selon la revendication 3 ou la revendication 4, dans laquelle le mécanisme de commande de couple (36) a un état non chargé dans lequel l'arbre de rotor (26) est coaxial avec l'arbre d'entraînement (38).

6. Turbine éolienne (10) selon la revendication 5, dans laquelle les cylindres sont agencés à un angle d'inclinaison par rapport à un axe perpendiculaire à un axe longitudinal de l'arbre d'entraînement (38) à l'état non chargé.

7. Turbine éolienne (10) selon l'une quelconque des revendications 3 à 6, comprenant en outre un système de commande pour le mécanisme de commande de couple (36), pour commander la pression hydraulique de chaque cylindre, de préférence dans laquelle la turbine éolienne (10) comprend des capteurs (92) pour fournir la rétroaction au système de commande (90), encore de préférence dans laquelle les capteurs (92) comprennent des capteurs de déplacement d'actionneur, au moins un pour chaque cylindre.

8. Turbine éolienne (10) selon la revendication 7, dans laquelle le système de commande comprend un organe de commande de rétroaction (94), qui calcule des forces de cylindre requises sur la base des données provenant des capteurs (92).

9. Turbine éolienne (10) selon la revendication 3, dans laquelle le mécanisme de commande de couple (36) comprend une combinaison de cylindres hydrauliques configurés pour agir en compression et en tension pendant le fonctionnement normal, de préférence dans laquelle le mécanisme de commande de couple (36) a un état non chargé dans lequel l'arbre de rotor (26) est coaxial avec l'arbre d'entraînement (38), encore de préférence dans lequel les cylindres sont alignés le long d'un axe perpendiculaire à un axe longitudinal de l'arbre d'entraînement (38) à l'état non chargé.

10. Turbine éolienne (10) selon l'une quelconque des revendications 1 à 9, dans laquelle le mécanisme de commande de couple (36) comprend au moins six liaisons (40) et dans laquelle lesdites au moins six liaisons (40) comprennent six cylindres hydrauliques configurés pour agir en compression pendant le fonctionnement normal.

11. Turbine éolienne (10) selon l'une quelconque des revendications 1 à 9, dans laquelle le mécanisme de commande de couple (36) comprend au moins six liaisons (40), et dans laquelle lesdites au moins six liaisons (40) comprennent trois paires de cylindres hydrauliques, dans laquelle un premier cylindre dans chaque paire est configuré pour agir en compression pendant le fonctionnement normal et un second cylindre dans chaque paire est configuré pour agir en tension pendant le fonctionnement normal.

12. Turbine éolienne (10) selon l'une quelconque des revendications précédentes, dans laquelle chaque raccordement pivotant entre les liaisons (40) et l'arbre de rotor (26) respectif ou l'arbre d'entraînement (38) comprend un joint sphérique ou un joint à rotule.

13. Turbine éolienne (10) selon l'une quelconque des revendications précédentes, comprenant en outre un dispositif à glissement de type à embrayage (46) agencé entre l'arbre d'entraînement (38) et le générateur (22), pour protéger le générateur dans des conditions de charge de couple prédéterminées, de préférence dans laquelle la turbine éolienne (10) comprend une boîte d'engrenages (20) agencée entre l'arbre d'entraînement (38) et le générateur (22), et dans laquelle le dispositif à glissement (46) est agencé entre la boîte d'engrenages (20) et le générateur (22), pour permettre le glissement entre un arbre de sortie de la boîte d'engrenages (20) et un arbre d'entrée du générateur (22) au-dessus des niveaux de couple prédéterminés, encore de préférence dans laquelle un dispositif de frein est agencé pour agir sur l'arbre de sortie de la boîte d'engrenages (20), et dans laquelle le dispositif de frein est prévu entre la boîte d'engrenages (20) et le dispositif à glissement (46).

14. Turbine éolienne (10) selon l'une quelconque des revendications précédentes, dans laquelle chaque liaison (40) est un dispositif actionné par voie hydraulique configuré pour subir une expansion ou se contracter le long d'un axe longitudinal.
